# EUROPEAN PATENT SPECIFICATION

(11) **EP 3 480 174 B1**
(45) Date of publication and mention of the grant of the patent: **11.12.2019**
(21) Application number: 18203662.4
(22) Date of filing: 31.10.2018
(51) Int. Cl.: C03B 33/06

(54) **METHOD AND DEVICE FOR SEPARATING A ROD-LIKE OR TUBULAR OBJECT MADE OF A BRITTLE MATERIAL**
VERFAHREN UND VORRICHTUNG ZUR TRENNUNG EINES STABFÖRMIGEN ODER ROHRFÖRMIGEN, AUS SPRÖDEM MATERIAL HERGESTELLTEN OBJEKTS
PROCÉDÉ ET DISPOSITIF DE SÉPARATION D'UN OBJET TUBULAIRE EN FORME DE TIGE OU CONSTITUÉ D'UN MATÉRIAU FRAGILE

(30) Priority: 01.11.2017 CZ 20170701
(43) Date of publication of application: 08.05.2019
(73) Proprietor: VÚTS, a.s., Liberec XI - Ruzodol I 460 01 Liberec (CZ)
(72) Inventor: Pustka, Martin, 460 06 Liberec (CZ); Sidlof, Pavel, 460 14 Liberec (CZ)
(74) Representative: Musil, Dobroslav

(56) References cited:
- WO-A1-2014/186999
- JP-A- 2009 149 482

## Description

### Technical field

A method for separating a rod-like or tubular object made of a brittle material, particularly glass, in which at first at least one circumferential notch is made on the surface of the object, and then the fixed object is acted on by a force impulse or impulses.

A device for separating a rod-like or tubular object made of a brittle material, particularly glass, which has been previously provided with circumferential notches at points where the object is to be separated, the device further comprising a source of impulsive force with an optional output and a clamping device for fastening the object relative to the impulsive force source.

### Background art

The labor input and productivity of large-series production of some types of beads, chatons and similar objects from tubes or rods made of a brittle material, particularly from glass tubes or small diameter rods, is primarily influenced by the requirement for the surface quality of their faces formed by the separation process. Currently, for example, cutting is performed by chopping or breaking. The drawback is the poor quality of the fractured surface.

Document US 2436819 from 1944, which relates to the production of glass beads, describes a bundle of long glass tubes arranged closely parallel to one another. The air spaces between the tube surfaces are filled up with a water-soluble material which, when solidified, forms together with the tubes a solid body. The body is then cut with a narrow abrasive disc into circular plates which are washed in water. This causes the solidified material to dissolve and the free beads are dried. The disadvantage is the relatively difficult operation of creating a rigid bundle of glass tubes and washing off the particles of adhesive material to clean the individual little glass bodies. Moreover, this operation is difficult to automate. The diameter of the tube bundle requires a rigid disc, which is reflected in the cutting thickness and hence in the great thickness of the cut. The surface of the tube cut will probably not be smooth enough without performing a further finishing operation.

Document DE102005054669A1 primarily deals with the cutting of glass panes. In the pane, a straight notch is cut by a cutting wheel, needle, or laser at the point where the pane is to be divided. An ultrasonic oscillator is brought into contact with the glass near the notch and is guided at a frequency of 20 to 30 kHz on the glass along the notch, thereby separating the glass in the notch region. The document also discloses an alternative method, namely a method of dividing a glass tube in whose surface the notch has been made previously. The contact surface of the ultrasound oscillator is then guided around the circumference of the tube in the notch region. However, this method is technically and economically unusable for dividing small diameter tubes, for example, in the production of glass beads.

Document JP2009149482A discloses a method of cutting a glass tube by the use of an ultrasonic vibration cutter. The cutter is pressed against the desired cutting location in the outer peripheral surface of a glass tube in order to scribe the tube and in a second step the tube is cut by the drive of said ultrasonic vibrator.

Document WO2014186999A1 discloses a method of cutting flat glass substrates to form a cutting gap. The cutting gap is in contact with the ultrasonic wave transmission medium. An ultrasonic generator is disposed above the cut glass substrate reaching the splitting region. When the cut glass substrate reaches the designated splitting position the sonotrode is adjusted to have an appropriate output power and to emit an ultrasonic wave, which is transmitted through a transmission medium. The transfer medium is water.

The aim of the invention is therefore to eliminate the drawbacks of the background art and propose a solution which would be economical, especially for glass tubes of small diameters, and which would enable to produce the resulting elements formed by division with the desired length and smooth surface of their end faces.

### Principle of the invention

The aim of the invention is achieved by a method for separating a rod-like or tubular object made of a brittle material, whose principle consists in that in order to separate a section of the object to be divided, at least the surface area of a circumferential notch is placed with a radial clearance between the ends of sonotrodes arranged around the entire circumference of the notch, whereby the ends of the sonotrodes and the circumference of the notch are in contact with the working liquid, whereupon acoustic waves are transmitted to the notch from each sonotrode. As a result, the separated object at this point is loaded by a tensile stress greater than the limit tensile strength of the material of the object to be separated.

In the first variant of separation, in order to generate acoustic waves, all sonotrodes are synchronously excited by pulsed tension, which is concentrated into the notch.

In the second variant of division, all sonotrodes are excited by harmonic tension having a frequency equal to the natural frequency of the sonotrodes, which causes recurrent formation of cavitations in the notch region and their subsequent implosions.

This method of separating a tube results in creating high quality surfaces of the preform faces, since an impact acts simultaneously on the entire circumference of the tube and the applied forces are uniformly distributed around the entire circumference.

The aim of the invention is also achieved by a device for separating a rod-like or tubular object made of a brittle material, whose principle is that the source of impulsive force is formed by a ring of radially arranged assemblies, which always comprise an ultrasonic oscillator and an adjoining sonotrode, whereby the active ends of the sonotrodes surround the entire circumference of the notch in the surface of the separated object at a distance determined by the circumferential radial gap, whereby at least the space of the radial gap is filled with the working liquid, through which contact is established between the active ends of the sonotrodes and the circumferential notch.

The space of the circumferential radial gap is sealed with respect to the lateral surfaces of the sonotrodes and other components of the impulsive force source, whereby the lateral surfaces of the sonotrodes and other components of the impulsive force source are arranged in the space of the dry chamber. The space of the radial gap between the ends of the sonotrodes and the tube surface is connected to a working liquid tank.

### Description of drawings

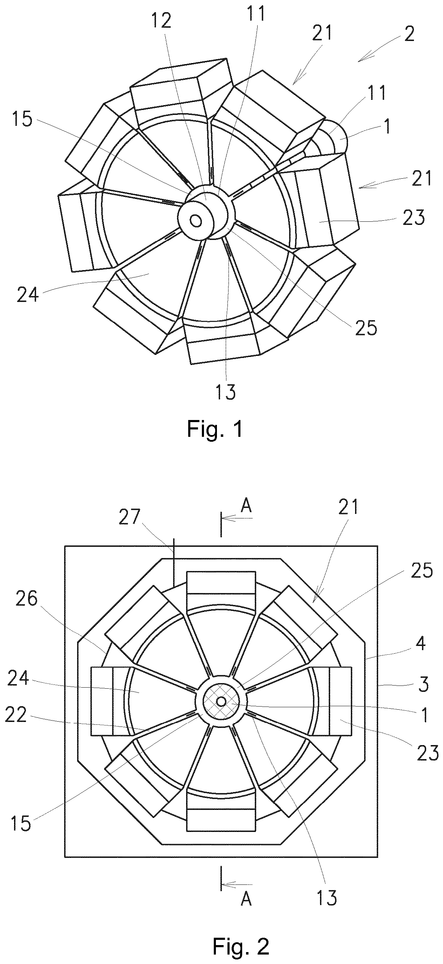

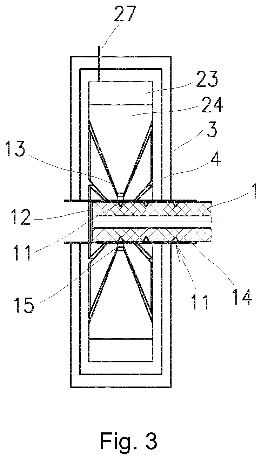

A part of the device according to the invention intended for the actual process of separating a glass tube or rod (hereinafter, for the sake of simplicity, only the term "tube" is used) is schematically represented in the drawing, wherein Fig. 1 shows an oblique view of the separating device with an inserted tube, Fig. 2 shows a front view of the separating device of Fig. 1 in the direction of the axis of the tube, the separating device being located in a housing with working liquid, and Fig. 3 is a sectional view A-A of Fig. 2 taken along the longitudinal axis of the tube.

### Examples of embodiment

The device according to the invention for separating a tube **1** made of a brittle material consists of two basic parts. The first part of the device, which is not a subject-matter of the invention and is not shown, comprises a cutting means, for example, a known device for disrupting the surface of the glass tube by making at least one circumferential notch **11** in the outer surface of the tube **1**. This is performed by any of the known cutting tools, such as a cutting wheel, needle, laser, etc. It is important for the notches to be spaced at the same mutual distances and to have the same shape, so that they will create the same weakening of the cross section of the tube wall. The circumferential notch is a region with considerably lower strength compared to the uninterrupted section of the tube, therefore the fracture and separation of the section of the tube **1** is performed in a controlled manner in the region of the notch. The separated sections of the tube **1** are hereinafter referred to as "preform".

The second part of the device shown in Fig. 1 is the actual active means for breaking off the preform **12** from the remaining section of the tube **1**, which is the source **2** of impulsive force. The source **2** of impulsive force has the shape of a flat ring, the outer circumference of which in an exemplary embodiment is substantially an octagon formed by quadrangular supports of the radial pyramidal assemblies **21** surrounding the circumference of the tube **1** and tapered towards the tube. Between the adjacent surfaces of the individual assemblies **21** there are gaps **22**, and therefore the assemblies **21** do not touch one another.

An ultrasonic oscillator **23** with a piezoelectric element is arranged in the circumferential part of each assembly **21**. The ultrasonic oscillator 23 is joined by a tapered sonotrode 24. The ends of the sonotrodes 24 form a short cylindrical opening, or an octagonal opening, which surrounds the outer circumference of the separated tube **1**. Between the ends of the sonotrodes **24** and the circumference of the tube **1** there is a radial gap **25**.

The ultrasonic oscillators **23** are connected by the schematically represented conductors **26** to the supply lead **27** of the electric current and an unillustrated control system.

The contact of the sonotrodes **24** with the separated tube **1** is in the described embodiment established by a working liquid, which is usually water. It is the end of the sonotrodes **24** facing the separated tube **1** and the surface of the tube **1** in the region of the notch **11** that is in contact with the working liquid, as shown in Fig. 1. At the same time, however, it is necessary that the other surfaces of the sonotrodes **24**, the ultrasonic oscillators **23** and the electric conductors **26**, **27**, through which the sonotrodes **24** are connected to the source of power supply, are isolated from the liquid.

Therefore, in the exemplary embodiment according to Figs. 2 and 3, an active means, more specifically, the source **2** of impulsive force in the section of the tube **1** with the circumferential notch **11**, in which the preform **12** is to be broken off, is mounted in the liquid tank **3**. The required height of the insulation is solved, for example, by means of an inner dry chamber **4** insulated by a schematically illustrated sealing **13** of the gaps between the sonotrodes **24** and other means (not shown). Thus, it is ensured that in contact with the liquid are only the ends of the sonotrodes **24** and the portion of the tube **1** surface in the region of the notch **11** in the close vicinity which is facing the ends of the sonotrodes **24**. The tube **1** is placed in the required position in an unillustrated guide means **14**, which at the same time allows filling up the space in the notch **11** region with a liquid after the displacement of the tube **1**.

The device according to the invention enables to separate the preforms **12** in two ways.

In the first case, pulsating stress is fed to the ultrasonic oscillators **23**, which causes all the sonotrodes **24** to transmit to the liquid an acoustic wave focused by the shape of the outlet portion of the sonotrodes **24** to the region of the notch **11** practically throughout its circumference. By applying a pressure wave to the sides of the notch **11** a tensile stress concentration occurs at its bottom, exceeding the limit tensile strength of the tube **1** material. As a result, the corresponding preform **12** is broken off.

In the second case, harmonic stress having a frequency equal to the natural frequency of the sonotrodes **24** is fed to the ultrasonic oscillators **23**, thereby generating acoustic waves of high intensity in the liquid. This causes recurrent formation of cavitations in the vicinity of the notch **11**. During their implosion, strong compression strokes occur in the vicinity of the notch **11**, which, as in the first case, causes the respective preform **12** to be broken off.

In both cases, the breaking off the preform **12** is followed by the displacement of the tube by the spacing between the adjacent notches **11** and the process of separation is repeated.

Using the method of dividing a tube **1** by circumferential impact according to the invention results in creating high quality surfaces of the faces of the preform **12**, since the impact acts simultaneously on the entire circumference of the tube and the applied forces are uniformly distributed around the entire circumference.

### List of references

- 1: tube
- 11: circumferential notch (on the tube surface)
- 12: preform
- 13: sealing (of the gaps between the sonotrodes)
- 14: clamping means of the tube (relative to the sonotrodes)
- 15: space with a liquid (between the ends of the sonotrodes and the circumference of the tube)
- 2: source of impulsive force (active means for breaking off the preform)
- 21: assembly (with the ultrasonic oscillator and the sonotrode)
- 22: gap between the sides of the sonotrodes
- 23: ultrasonic oscillator
- 24: sonotrode
- 25: radial gap (between the end of the electrodes and circumference of the tube)
- 26: electric current conductor (to the ultrasonic oscillators)
- 27: supply lead (of the electric current)
- 3: tank (with liquid)
- 4: dry chamber

## Claims

1. A method for separating a rod-like or tubular object made of a brittle material, especially of glass, in which at first at least one circumferential notch (11) is made on the surface of the object at a predetermined point, whereupon a force impulse or impulses is/are applied to the fixed object, **characterized in that** in order to separate a section of the object to be separated, at least the surface area of the circumferential notch (11) is placed with a radial clearance between the ends of the sonotrodes (24) arranged around the entire circumference of the notch (11), whereby the ends of the sonotrodes (24) and the circumference of the notch (11) are in contact with the working liquid, whereupon acoustic waves are transmitted to the notch (11) region from each sonotrode (24), by which means the separated object is in this region loaded by a tensile stress greater than the limit tensile strength of the material of the object to be separated.

2. The method for separating a rod-like or tubular object made of a brittle material according to claim 1, **characterized in that** to generate acoustic waves, all the sonotrodes (24) are synchronously excited by impulse stress, which is concentrated to the region of the notch (11).

3. The method for separating a rod-like or tubular object made of a brittle material according to claim 1, **characterized in that** in order to generate acoustic waves, all the sonotrodes (24) are excited by harmonic stress having a frequency equal to the natural frequency of the sonotrodes, thereby causing recurrent formation of cavitations in the notch (11) region and their subsequent implosion.

4. A device for separating a rod-like or tubular object made of a brittle material, especially glass, which is previously provided with circumferential notches (11) in the regions where the object is to be separated, which comprises a source (2) of impulsive force with an optional output and a clamping means (14) to fix the object to be separated with respect to the source (2) of impulsive force, **characterized in that** the source (2) of impulsive force is formed by a ring of radially arranged assemblies (21) which always comprise an ultrasonic oscillator (23) and an adjoining sonotrode (24), whereby the active ends of the sonotrodes (24) surround at a distance defined by the circumferential radial gap (25) the entire circumference of the notch (11) in the surface of the separated object, whereby at least the space of the radial gap (25) is filled with the working liquid, which establishes contact between the active ends of the sonotrodes (24) and the circumferential notch (11).

5. The device for separating a rod-like or tubular object according to claim 4, **characterized in that** the space of the circumferential radial gap (25) je is sealed with respect to the lateral surfaces of the sonotrodes (24) and other components of the source (2) of impulsive force.

6. The device for separating a rod-like or tubular object according to claim 4 or 5, **characterized in that** the lateral surfaces of the sonotrodes (24) and other parts of the source (2) of impulsive force are arranged in the space of the dry chamber (4).

7. The device for separating a rod-like or tubular object according to any of claims 4 to 6, **characterized in that** the space of the radial gap (25) is connected to a working liquid tank.

8. The device for separating a rod-like or tubular object according to claim 7, **characterized in that** the dry chamber (3) is surrounded by the working liquid tank.

9. The device for separating a rod-like or tubular object according to any of claims 4 to 8, **characterized in that** the working liquid is water.

## Patentansprüche

1. Verfahren zur Teilung eines stab- oder rohrförmigen Gegenstandes, der aus einem zerbrechlichen Material, insbesondere aus Glas, gebildet wird, bei dem auf der Oberfläche des Gegenstandes zuerst in der bestimmten Stelle mindestens ein Umfangsritz (11) gebildet wird, wonach auf den befestigten Gegenstand mit einem Kraftimpuls oder Kraftimpulsen gewirkt wird, **dadurch gekennzeichnet, dass** zur Teilung des Teiles des zu teilenden Gegenstandes mindestens die Oberflächenfläche des Umfangsritzes (11) mit einem Radialspiel zwischen die Enden der Sonotroden (24) angebracht wird, die um den ganzen Umfang des Ritzes (11) herum angeordnet sind, wobei die Enden der Sonotroden (24) und der Umfang des Ritzes (11) mit der Arbeitsflüssigkeit im Kontakt stehen, wonach aus jeder Sonotrode (24) eine akustische Wellenbewegung in die Stelle des Ritzes (11) gesendet wird, wodurch der zu teilende Gegenstand in dieser Stelle mit einer Zugspannung belastet wird, die größer als die Zugfestigkeitsgrenze des Materials des zu teilenden Gegenstandes ist.

2. Verfahren zur Teilung eines stab- oder rohrförmigen Gegenstandes, der aus einem zerbrechlichen Material gebildet wird, nach dem Anspruch 1, **dadurch gekennzeichnet, dass** zum Hervorrufen der akustischen Wellenbewegung alle Sonotroden (24) mit der Spannung eines Impulscharakters synchron erregt werden, die sich in die Stelle des Ritzes (11) konzentriert.

3. Verfahren zur Teilung eines stab- oder rohrförmigen Gegenstandes, der aus einem zerbrechlichen Material gebildet wird, nach dem Anspruch 1, **dadurch gekennzeichnet, dass** zum Hervorrufen der akustischen Wellenbewegung alle Sonotroden (24) mit harmonischer Spannung mit solcher Frequenz erregt werden, die der eigenen Frequenz von Sonotroden gleich ist, wodurch in der Stelle des Ritzes (11) in der Flüssigkeit eine wiederholte Entstehung von Kavitationshohlräumen und ihre nachfolgende Implosion hervorgerufen werden.

4. Einrichtung zur Teilung des stab- oder rohrförmigen Gegenstandes, der aus einem zerbrechlichen Material, insbesondere aus Glas, gebildet wird, der im Voraus Umfangsritze (11) in den Stellen aufweist, in denen der jeweilige Gegenstand geteilt werden soll, die eine Quelle (2) der Impulskraft mit einer wählbaren Leistung und ein Aufnahmemittel (14) zur Lagerung des zu teilenden Gegenstandes in Bezug auf die Quelle (2) der Impulskraft aufweist, **dadurch gekennzeichnet, dass** die Quelle (2) der Impulskraft durch einen Ring der radial angeordneten Gruppen (21) gebildet wird, die immer einen Ultraschalloszillator (23) und die daran anschließende Sonotrode (24) aufweisen, wobei die aktiven Enden der Sonotroden (24) in dem durch den radialen Umfangsspalt (25) gegebenen Abstand den ganzen Umfang des Ritzes (11) in der Oberfläche des zu teilenden Gegenstandes umschließen, wobei mindestens der Raum des radialen Umfangsspaltes (25) mit einer Arbeitsflüssigkeit ausgefüllt ist, durch die der Kontakt zwischen aktiven Enden der Sonotroden (24) und dem Umfangsritz (11) vermittelt wird.

5. Einrichtung zur Teilung des stab- oder rohrförmigen Gegenstandes nach dem Anspruch 4, **dadurch gekennzeichnet, dass** der Raum des radialen Umfangsspaltes (25) in Bezug auf die Seitenflächen der Sonotroden (24) und weitere Teile der Quelle (2) der Impulskraft abgedichtet ist.

6. Einrichtung zur Teilung des stab- oder rohrförmigen Gegenstandes nach dem Anspruch 4 oder 5, **dadurch gekennzeichnet, dass** die Seitenflächen der Sonotroden (24) und weitere Teile der Quelle (2) der Impulskraft im Raum der Trockenkammer (4) angeordnet sind.

7. Einrichtung zur Teilung des stab- oder rohrförmigen Gegenstandes nach einem der Ansprüche 4 bis 6, **dadurch gekennzeichnet, dass** der Raum des Radialspaltes (25) an den Behälter der Arbeitsflüssigkeit angeschlossen ist.

8. Einrichtung zur Teilung des stab- oder rohrförmigen Gegenstandes nach dem Anspruch 7, **dadurch gekennzeichnet, dass** der Behälter der Arbeitsflüssigkeit die Trockenkammer (3) umschließt.

9. Einrichtung zur Teilung des stab- oder rohrförmigen Gegenstandes nach einem der Ansprüche 4 bis 8, **dadurch gekennzeichnet, dass** die Arbeitsflüssigkeit Wasser ist.

## Revendications

1. Procédé de division d'un objet en forme de tige ou tubulaire formé d'un matériau fragile, en particulier du verre, dans lequel au moins une encoche circonférentielle (11) est d'abord formée sur la surface de l' objet à un emplacement désigné, après quoi l' objet fixé est soumis à une impulsion de force ou à des impulsions, **caractérisé en ce que** pour séparer une partie de la pièce divisée au moins la surface de l'encoche circonférentielle (11) est positionnée avec un jeu radial entre les extrémités de la sonotrode (24) disposées autour de la totalité de la circonférence de l'encoche (11) tandis que les extrémités de la sonotrode (24) et la circonférence de l'encoche (11) sont en contact avec le fluide de travail, après quoi les ondes acoustiques sont transmises de chaque sonotrode (24) à la place de l'encoche (11), donc à ce stade l'objet divisé est soumis à une contrainte de traction supérieure à la résistance à la traction du matériau de l'objet divisé

2. Procédé de division d'un objet en forme de tige ou tubulaire formé du matériau fragile selon la revendication 1, **caractérisé en ce que**, pour produire des ondes acoustiques, toutes les sonotrodes (24) sont excitées de manière synchrone par une tension du type à impulsions qui se concentre au niveau de l'encoche (11).

3. Procédé de division d'un objet en forme de tige ou tubulaire formé d'un matériau fragile selon la revendication 1, **caractérisé en ce que** toutes les sonotrodes (24) sont excitées par une tension harmonique à une fréquence égale à la fréquence naturelle de la sonotrode pour induire des ondes acoustiques, à la suite dans le lieu de l'encoche (11) se développe dans le fluide la récurrence des cavités et leurs implosions ultérieures.

4. Dispositif pour diviser un objet en forme de tige ou tubulaire formé d'un matériau fragile, en particulier de verre, qui est pourvu à l'avance d'encoches circonférentielles (11) dans les lieux, dans lequel l'objet doit être divisé, qui comprend une source (2) de force d'impulsion avec la puissance sélectionnable et un moyen de serrage (14) pour recevoir l'objet à diviser par rapport à la source (2) de la force d'impulsion, **caractérisé en ce que** la source de la force d'impulsion (2) est formée par un anneau d'ensembles agencés radialement (21), qui contiennent toujours un oscillateur à ultrasons (23) et sa sonotrode associée (24), tandis que les extrémités actives de la sonotrode (24) entourent la totalité de la circonférence de l'encoche (11) dans la surface de l'objet divisé à une distance donnée par l'interstice radial circonférentiel (25), tandis qu' au moins l'espace de l' interstice radiale (25) est rempli d'un fluide de travail à travers lequel intervient le contact entre les extrémités actives de la sonotrode (24) et l'encoche circonférentielle (11).

5. Dispositif pour diviser un objet en forme de tige ou tubulaire selon la revendication 4, **caractérisé en ce que** l'interstice radial circonférentiel (25) est scellé par rapport aux surfaces latérales de la sonotrode (24) et d'autres parties de la source de force d'impulsion (2).

6. Dispositif pour diviser un objet en forme de tige ou tubulaire selon la revendication 4 ou 5, **caractérisé en ce que** les surfaces latérales de la sonotrode (24) et d'autres parties de la source (2) de la force d'impulsion sont agencées dans l'espace de la chambre sèche (4).

7. Dispositif pour diviser un objet en forme de tige ou tubulaire selon l'une quelconque des revendications 4 à 6, **caractérisé en ce que** l'espace de l'interstice radial (25) est relié au réservoir du fluide de travail.

8. Dispositif pour diviser un objet en forme de tige ou tubulaire selon la revendication 7, **caractérisé en ce que** le réservoir du fluide de travail entoure la chambre sèche (3).

9. Dispositif pour diviser un objet en forme de tige ou tubulaire selon l'une quelconque des revendications 4 à 8, **caractérisé en ce que** le fluide de travail est l'eau.
